# EUROPEAN PATENT APPLICATION

(11) **EP 0 949 001 A1**
(43) Date of publication of application: **13.10.1999**
(21) Application number: 99104671.5
(22) Date of filing: 09.03.1999
(51) Int. Cl.: B01J 37/34, B01J 37/02

(54) **Coated metal support and method of preparing the same using a laser beam**

(30) Priority: 20.03.1998 US 78704
(71) Applicant: Haldor Topsoe A/S, DK-2800 Lyngby (DK)
(72) Inventor: Primdahl, Ivar Ivarsen, 2400 Copenhagen NV (DK)

(57) **Abstract**

A catalyzed hardware comprising a surface of at least a metallic substrate and on the metallic surface at least one layer of a catalytic active component, wherein the surface is engraved with a laser beam.

## Description

The present invention relates to catalyzed hardware and a method of preparing catalyzed hardware. In particular, the invention is directed to certain improvements in applying a coating of catalytic active material on a metallic substrate to obtain catalyzed hardware with high abrasion resistance and durability of the coating.

Several methods are known to apply catalytic material on surface of metallic bodies. By the most common method, a layer of ceramic material usually alumina is adhered to the metallic surface as a binder layer. The binder layer is then impregnated or coated with the catalytic active material.

It has now been found that when pretreating a metallic surface with laser engraving, the catalytic material much better adheres to the surface resulting in improved abrasion and durability of the catalytic surface.

Accordingly, this invention provides a catalyzed hardware comprising a surface of at least a metallic substrate and on the metallic surface at least one layer of a catalytic active component, wherein the surface is engraved with a laser beam.

Furthermore, the invention provides a method for the manufacture of catalyzed hardware comprising the steps of engraving a metallic surface of the hardware by means of a laser beam to obtain on the surface a predetermined structure of grooves with a predetermined depth and diameter; and
coating the engraved surface with at least one layer containing catalytic active material.

The catalytic active material containing layer for use in the invention, may thereby consist of anyone of the known catalytic materials, including metals, metal oxides and mixtures thereof. Optionally, the layer may further consist of binder, preferably selected from ceramic oxides, containing the catalytic component or being impregnated or coated with the catalytic material.

The metallic surface may be of any shape and may consist of any metal or alloy being able to withstand process conditions employed during use of the catalyzed hardware.

In a preferred embodiment of the invention the ratio of the depth and the diameter of the engraved grooves will be not higher than 50.

## Claims

1. A catalyzed hardware comprising a surface of at least a metallic substrate and on the metallic surface at least one layer of a catalytic active component, wherein the surface is engraved with a laser beam.

2. Method for the manufacture of catalyzed hardware comprising the steps of engraving a metallic surface of the hardware by means of a laser beam to obtain on the surface a predetermined structure of grooves with a predetermined depth and diameter; and
coating the engraved surface with at least one layer containing catalytic active material.
